# EUROPÄISCHE PATENTSCHRIFT

(11) **EP 3 962 733 B1**
(45) Veröffentlichungstag und Bekanntmachung des Hinweises auf die Patenterteilung: **18.10.2023**
(21) Anmeldenummer: 20717700.7
(22) Anmeldetag: 16.04.2020
(51) Int. Cl.: B32B 17/10, B32B 3/30

(54) **VERBUNDSCHEIBE MIT EINER AUSSPARUNG IN DER INNENSCHEIBE**
LAMINATED GLAZING WITH A RECESS IN THE INTERNAL PANE
VITRE COMPOSITE DOTÉE D'UN ÉVIDEMENT DANS LA VITRE INTÉRIEURE

(30) Priorität: 30.04.2019 EP 19171753
(43) Veröffentlichungstag der Anmeldung: 09.03.2022
(73) Patentinhaber: Saint-Gobain Glass France, 92400 Courbevoie (FR)
(72) Erfinder: MATHEISEN, Christopher, 52134 Herzogenrath (DE); WOHLFEIL, Dirk, 4730 Raeren (BE); VARGA, Gabor, 52134 Herzogenrath (DE); KOLF, Michael, 52249 Eschweiler (DE)
(74) Vertreter: Hermanns, Ellen
(86) Internationale Anmeldenummer: PCT/EP2020/060728
(87) Internationale Veröffentlichungsnummer: WO 2020/221597

(56) Entgegenhaltungen:
- WO-A1-2016/208370
- WO-A1-2018/178883
- DE-U1-202019 102 137
- US-A1- 2019 018 277

## Beschreibung

Die Erfindung betrifft eine Verbundscheibe mit einer Aussparung in der Innenscheibe, ein Verfahren zu ihrer Herstellung und ihre Verwendung.

Moderne Fahrzeuge werden mit einer steigenden Anzahl an Sensoren ausgestattet, deren Signale beispielsweise zur Unterstützung des Fahrers verwendet werden. Beispiele solcher Sensoren sind optische Sensoren, wie Kameras, beispielsweise Videokameras oder Nachtsichtkameras, Regensensoren, Lichtsensoren oder Abstandsmesser. Nach vorne gerichtete Sensoren werden häufig an der innenraumseitigen Oberfläche der Windschutzscheibe befestigt, typischerweise mittig in der Nähe der Oberkante. Die Sensoren werden im Stand der Technik durch einen opaken Abdeckdruck auf der Windschutzscheibe verdeckt. Dazu ist der übliche periphere, rahmenartige Abdeckdruck, der in erster Linie als UV-Schutz für den Montagekleber der Windschutzscheibe dient, im Bereich der Sensoren deutlich in Richtung der Scheibenmitte vergrößert.

Herkömmliche Sensoren sind so an der Windschutzscheibe angebracht, dass ihre Detektionsrichtung horizontal verläuft. Da die Windschutzscheibe stark geneigt im Fahrzeug installiert ist, beispielsweise mit einem Einbauwinkel von 60° zur Vertikalen, schließt die Detektionsrichtung des Sensors einen sehr spitzen Winkel von etwa 30° mit der Windschutzscheibe ein. Daraus resultiert ein vergleichsweise großes, im Wesentlichen trapezförmiges, sogenanntes Sensorfenster der Windschutzscheibe. Das Sensorfenster ist derjenige Bereich der Windschutzscheibe, durch den verlaufende Strahlung durch den Sensor detektiert wird. Das Sensorfenster der Windschutzscheibe ist also der Bereich, der im Detektionsstrahlengang des Sensors liegt.

Je mehr Sensoren an der Scheibe befestigt werden sollen, desto mehr Fläche der Windschutzscheibe wird durch die Summe der Sensorfenster eingenommen und desto größer muss der Abdeckdruck ausgebildet werden, der die Sensoren verdecken soll.

Der Abdeckdruck wird bei der Herstellung einer Verbundscheibe im Siebdruck vor dem Biegen der einzelnen Scheiben auf die Außenscheibe oder die Innenscheibe aufgebracht. Während des Biegeprozesses, der üblicherweise bei Temperaturen von 500 °C bis 700 °C durchgeführt wird, wird die Hitze von dem Siebdruck stärker absorbiert als von der jeweiligen Scheibe. Dies kann zu optischen Verzerrungen in von Siebdruck, insbesondere Schwarzdruck, umgebenden Sensorfenstern und/oder zur Glasbruch führen.

Die Sensorfenster sollten frei von Eis oder Beschlag gehalten werden. Dies kann beispielsweise durch beheizbare Sensorfenster ermöglicht werden. Dazu werden beispielsweise im Bereich der Sensorfenster Heizdrähte einlaminiert. Solche einlaminierte Heizdrähte sind jedoch unvorteilhaft für die optische Qualität der Sensorfenster.

Heutzutage werden Sensoren, Heizelemente und Antennen an der Innenseite der Innenscheibe aufgebracht oder im Laminat eingebracht und der Abdeckdruck zur Abdeckung der Sensoren, Heizelemente und Antennen in einem separaten Arbeitsschritt und als separate Schicht aufgebracht. Zudem werden die einzelnen funktionalen Elemente, d.h. die Sensoren, Heizelemente oder Antennen einzeln aufgebracht bzw. eingebracht.

Zur Verbesserung der optischen Eigenschaften des Sensorfensters kann die Innenscheibe im Bereich des Sensorfensters eine Aussparung aufweisen. Verbundscheiben mit einer Aussparung in der Innenscheibe sind beispielsweise in der WO 2018/142078 A1, der WO 2018/178883 A1, der WO 2016/208370 A1 und der DE 10 2007 042 028 A1 offenbart. Allerdings geht eine solche Aussparung in der Innenscheibe einer aus einer Außenscheibe, einer Innenscheibe und mindestens einer thermoplastischen Zwischenschicht bestehenden Verbundscheibe mit Einbußen hinsichtlich der Stabilität der Verbundscheibe einher.

DE 20 2019 102 137 U1 offenbart Verbundscheiben mit einer Aussparung in der thermoplastischen Zwischenschicht.

Der vorliegenden Erfindung liegt die Aufgabe zugrunde, eine verbesserte Verbundscheibe bereitzustellen, bei der die Gefahr von Glasbruch während des Biegeprozesses vermindert ist, in der die optische Qualität im Bereich eines vorhandenen Sensorfensters verbessert ist, die mechanisch stabilisiert ist und in die optional ein oder mehrere elektrisch leitfähige Elemente eingebracht sind.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe umfasst mindestens eine Außenscheibe und eine Innenscheibe, eine erste thermoplastische Zwischenschicht, eine zweite thermoplastische Zwischenschicht und ein Einlegeelement, wobei die erste thermoplastische Zwischenschicht unmittelbar benachbart zur Außenscheibe angeordnet ist, die zweite thermoplastische Zwischenschicht unmittelbar benachbart zur Innenscheibe angeordnet ist und das Einlegeelement zwischen der ersten thermoplastischen Zwischenschicht und der zweiten thermoplastischen Zwischenschicht angeordnet ist.

Das Einlegeelement ist nur in einem Bereich der Verbundscheibe angeordnet, d.h. es ist von den äußeren Abmessungen her kleiner als die Verbundscheibe und erstreckt sich somit nicht über die gesamte Verbundscheibe. Bevorzugt erstreckt sich das Einlegeelement über maximal 50 %, besonders bevorzugt über maximal 30 %, ganz besonders über maximal 10 % der Fläche der Verbundscheibe.

Erfindungsgemäß weist die Innenscheibe eine Aussparung auf und die zweite thermoplastische Zwischenschicht weist ebenfalls eine Aussparung auf. Die Aussparung in der zweiten thermoplastischen Zwischenschicht ist erfindungsgemäß in Durchsicht vollständig innerhalb des Bereichs, in dem das Einlegeelement angeordnet ist, angeordnet. Die Aussparung in der Innenscheibe ist erfindungsgemäß in Durchsicht vollständig innerhalb der Aussparung in der zweiten thermoplastischen Zwischenschicht angeordnet.

Die Außenscheibe, die Innenscheibe, die erste thermoplastische Zwischenschicht und die zweite thermoplastische Zwischenschicht haben im Wesentlichen die gleichen äußeren Abmessungen. Sie erstrecken sich somit im Wesentlichen über die gesamte Länge und Breite der erfindungsgemäßen Verbundscheibe, wobei die zweite thermoplastische Zwischenschicht und die Innenscheibe wie oben beschrieben jeweils eine Aussparung aufweisen und die erste thermoplastische Zwischenschicht und die Außenscheibe keine Aussparung aufweisen.

Die Außenscheibe und die Innenscheibe bestehen typischerweise aus Glas. Die Verbundscheibe ist insbesondere eine Fahrzeug-Verbundscheibe und somit zur Abtrennung eines Fahrzeuginnenraums von einer äußeren Umgebung vorgesehen. Die Verbundscheibe ist also eine Fensterscheibe, die in eine Fensteröffnung der Fahrzeugkarosserie eingesetzt ist oder dafür vorgesehen ist. Die erfindungsgemäße Verbundscheibe ist insbesondere eine Windschutzscheibe eines Kraftfahrzeugs.

Mit Innenscheibe wird diejenige Scheibe bezeichnet, welche dafür vorgesehen ist, in Einbaulage dem Innenraum des Fahrzeugs zugewandt zu sein. Mit Außenscheibe wird diejenige Scheibe bezeichnet, welche dafür vorgesehen ist, in Einbaulage der äußeren Umgebung des Fahrzeugs zugewandt zu sein. Diejenige Oberfläche der jeweiligen Scheibe, welche in Einbaulage der äußeren Umgebung des Fahrzeugs zugewandt ist, wird als außenseitige Oberfläche bezeichnet. Diejenige Oberfläche der jeweiligen Scheibe, welche in Einbaulage dem Innenraum des Fahrzeugs zugewandt ist, wird als innenraumseitige Oberfläche bezeichnet.

Der Bereich der Verbundscheibe, der im Detektionsstrahlengang eines Sensors angeordnet ist beziehungsweise dafür vorgesehen ist, wird als Sensorbereich oder Sensorfenster bezeichnet. Strahlung, die im Sensorfenster durch die Verbundscheibe tritt, wird durch den Sensor detektiert.

Bevorzugt ist die Aussparung in der Innenscheibe als Sensorfenster für einen optischen Sensor geeignet.

Handelt es sich bei dem Sensor um eine Kamera, so kann der Bereich der Verbundscheibe, der im Detektionsstrahlengang der Kamera angeordnet ist beziehungsweise dafür vorgesehen ist, auch als Kamerabereich oder Kamerafenster bezeichnet werden. Strahlung, die im Kamerafenster durch die Verbundscheibe tritt, wird durch die Kamera detektiert.

In einer Ausführungsform der erfindungsgemäßen Verbundscheibe umfasst das Einlegeelement eine Substratschicht und eine opake Schicht, wobei die opake Schicht eine Aussparung aufweist, die in Durchsicht vollständig innerhalb der Aussparung in der Innenscheibe angeordnet ist. Die Substratschicht ist bevorzugt transparent. Bevorzugt ist die Aussparung in der Substratschicht ein Sensorfenster für einen optischen Sensor. Optional ist bei dieser Ausführungsform einer erfindungsgemäßen Verbundscheibe in Durchsicht mindestens im Bereich der Aussparung in der opaken Schicht ein als ein elektrisch heizbares Element ausgebildetes elektrisch leitfähiges Element angeordnet. Das optionale als ein elektrisch heizbares Element ausgebildete elektrisch leitfähige Element kann auch als eine elektrisch leitfähige Schicht oder Beschichtung ausgebildet sein, die vollflächig auf der Substratschicht aufgebracht ist.

Bevorzugt ist die opake Schicht unmittelbar benachbart zur ersten thermoplastischen Schicht angeordnet.

In einer weiteren Ausführungsform der erfindungsgemäßen Verbundscheibe umfasst das Einlegeelement eine Substratschicht, die bereichsweise opak eingefärbt ist und einen Bereich aufweist, der von der opaken Einfärbung ausgenommen ist, d.h. nicht opak eingefärbt und somit transparent ist. Der von der opaken Einfärbung ausgenommene Bereich ist in Durchsicht vollständig innerhalb der Aussparung in der Innenscheibe angeordnet. Bevorzugt ist der von der opaken Einfärbung ausgenommene Bereich der Substratschicht ein Sensorfenster für einen optischen Sensor. Optional ist bei dieser Ausführungsform einer erfindungsgemäßen Verbundscheibe in Durchsicht mindestens in dem Bereich, der von der opaken Einfärbung ausgenommen ist, ein als ein elektrisch heizbares Element ausgebildetes elektrisch leitfähiges Element angeordnet. Das optionale als ein elektrisch heizbares Element ausgebildete elektrisch leitfähige Element kann auch als eine elektrisch leitfähige Schicht oder Beschichtung ausgebildet sein, die vollflächig auf der Substratschicht aufgebracht ist.

In bevorzugten Ausführungsformen der erfindungsgemäßen Verbundscheibe ist wie oben beschrieben die Aussparung in der opaken Schicht oder der von der opaken Einfärbung ausgenommene Bereich der Substratschicht ein Sensorfenster für einen optischen Sensor.

Die Fläche der Aussparung in der opaken Schicht oder die Fläche des von der opaken Einfärbung ausgenommenen Bereichs einer bereichsweise eingefärbten Substratschicht entspricht bevorzugt mindestens der Größe des für die jeweiligen Sensoren benötigten Sensorfensters, besonders bevorzugt genau der Größe des für die jeweiligen Sensoren benötigten Sensorfensters. Die Aussparung in der opaken Schicht oder die Fläche des von der opaken Einfärbung ausgenommenen Bereichs einer bereichsweise eingefärbten Substratschicht hat bevorzugt eine Fläche von mindestens 1 cm², besonders bevorzugt von 1 cm² bis 500 cm², ganz besonders bevorzugt von 10 cm² bis 250 cm², insbesondere von 20 cm² bis 100 cm², beispielsweise 35 cm². Das Sensorfenster ist beispielsweise zwischen 7 cm und 10 cm hoch und zwischen 8 cm und 40 cm breit.

In einer Ausführungsform ist die Aussparung in der opaken Schicht oder der von der opaken Einfärbung ausgenommenen Bereich einer bereichsweise eingefärbten Substratschicht trapezförmig. Eine trapezförmige Aussparung oder ein von der opaken Einfärbung ausgenommener trapezförmiger Bereich ist insbesondere als Sensorfenster für eine Kamera geeignet. In einer weiteren Ausführungsform ist die Aussparung in der opaken Schicht oder der von der opaken Einfärbung ausgenommenen Bereich einer bereichsweise eingefärbten Substratschicht kreisförmig oder oval. Eine kreisförmige oder ovale Aussparung oder ein von der opaken Einfärbung ausgenommener Bereich ist insbesondere als Sensorfenster für einen Regensensor geeignet.

Wie oben beschrieben ist in Durchsicht die Aussparung in der Innenscheibe vollständig innerhalb der Aussparung in der zweiten thermoplastischen Zwischenschicht angeordnet und die Aussparung in der opaken Schicht oder der von der opaken Einfärbung ausgenommene Bereich einer bereichsweise opak eingefärbten Substratschicht ist in Durchsicht vollständig innerhalb der Aussparung der Innenscheibe angeordnet.

Somit haben in einer Ausführungsform die Aussparung in der Innenscheibe, die Aussparung in der zweiten thermoplastischen Zwischenschicht und die Aussparung in der opaken Schicht oder der von der opaken Einfärbung ausgenommene Bereich der bereichsweise opak eingefärbten Substratschicht dieselben äußeren Abmessungen und liegen in Durchsicht deckungsgleich übereinander.

In einer bevorzugten Ausführungsform ist die Aussparung in der zweiten thermoplastischen Zwischenschicht vor der Lamination der Verbundscheibe von den Abmessungen größer als die Aussparung in der Innenscheibe, wobei die Aussparung in der Innenscheibe bevorzugt in Durchsicht im Wesentlichen mittig in der Aussparung in der zweiten thermoplastischen Zwischenschicht angeordnet ist. Beispielsweise beträgt der Abstand von der Innenkante der zweiten thermoplastischen Schicht von der Innenkante der Innenscheibe vor der Lamination 5 mm bis 10 mm. Auf diese Weise wird vermieden, dass während der Lamination die zweite thermoplastische Zwischenschicht in die Aussparung in der Innenscheibe hineinfließt. Alternativ kann ein Hineinfließen der zweiten thermoplastischen Zwischenschicht während der Lamination auch durch eine Barriere an der Innenkante zweiten thermoplastischen Zwischenschicht verhindert werden. Eine solche Barriere kann beispielsweise Teflonstreifen gebildet sein und kann optional nach der Lamination aus der Verbundscheibe entfernt werden.

In einer weiteren bevorzugten Ausführungsform ist die Aussparung in der opaken Schicht oder der von der opaken Einfärbung ausgenommene Bereich der bereichsweise opak eingefärbten Substratschicht von den Abmessungen kleiner als die Aussparung in der Innenscheibe, wobei die Aussparung in der opaken Schicht oder der von der opaken Einfärbung ausgenommene Bereich bevorzugt in Durchsicht im Wesentlichen mittig in der Aussparung in der Innenscheibe angeordnet ist. Beispielsweise beträgt der Abstand von der Innenkante der opaken Schicht oder von der Innenkante des Bereichs, der opak eingefärbt ist, zur Innenkante der Innenscheibe 5 mm bis 50 mm, bevorzugt, 7 mm bis 10 mm. Auf diese Weise ist die Innenkante der Innenscheibe bei Durchsicht von außen durch die opake Schicht oder den opak eingefärbten Bereich einer bereichsweise opak eingefärbten Substratschicht verdeckt.

Die erfindungsgemäße Verbundscheibe ist insbesondere dafür vorgesehen und geeignet, dass ein optischer Sensor an der Scheibe befestigt wird, die in Einbaulage die Innenscheibe darstellt. Dazu kann die innenraumseitige Oberfläche der Innenscheibe mit geeigneten Halterungen ausgestattet sein, beispielsweise mit einem *Bracket* oder Gehäuse. Der an der Innenscheibe befestigte optische Sensor ist bevorzugt auf die Aussparung in der Innenscheibe gerichtet.

Die an der Scheibe befestigten optischen Sensoren sind bevorzugt Kameras wie Videokameras oder Nachtsichtkameras, Regensensoren, Lichtsensoren, Abstandsmesser oder LIDAR (light detection and ranging) Systeme. Beim Vorhandensein von mehr als einem an der Scheibe befestigten optischen Sensor, kann die Art der einzelnen optischen Sensoren auch unterschiedlich sein.

Die im Einlegeelement vorhandene Substratschicht kann auch als eine elektrisch leitfähige Substratschicht ausgebildet sein. In diesem Fall enthält die Substratschicht ein elektrisch leitfähiges Polymer oder besteht daraus. Beispiele für leitfähige und somit beheizbare Polymere sind Poly-3,4-ethylendioxythiophen (PEDOT) mit Polystyrolsulfonat (PSS) als Gegenion, dotiertes Polyacetylen (PAC) und Polyanilin (PAni).

In einer bevorzugten Ausführungsform der erfindungsgemäßen Verbundscheibe weist das Einlegeelement mindestens ein elektrisch leitfähiges Element auf.

Somit umfasst das Einlegeelement in einer Ausführungsform eine Substratschicht, eine opake Schicht und mindestens ein elektrisch leitfähiges Element, wobei die opake Schicht eine Aussparung aufweist, die in Durchsicht vollständig innerhalb der Aussparung in der Innenscheibe angeordnet ist. Das mindestens eine elektrisch leitfähige Element kann unmittelbar benachbart zur Substratschicht, unmittelbar benachbart zur opaken Schicht oder zwischen der Substratschicht und der opaken Schicht angeordnet sein.

In einer weiteren Ausführungsform umfasst das Einlegeelement eine Substratschicht, die bereichsweise opak eingefärbt ist, und mindestens ein elektrisch leitfähiges Element, wobei die Substratschicht einen Bereich aufweist, der von der opaken Einfärbung ausgenommen ist und in Durchsicht vollständig innerhalb der Aussparung in der Innenscheibe angeordnet ist. Das mindestens eine elektrisch leitfähige Element ist in diesem Fall unmittelbar benachbart zur Substratschicht angeordnet.

Das mindestens eine elektrisch leitfähige Element kann unabhängig voneinander beispielsweise als ein elektrisch heizbares Element, ein Feuchtigkeitssensor, ein Drucksensor, eine Antenne oder eine Leiterplatte, d.h. ein Träger für elektronische Leitungen und Komponenten ausgebildet sein.

Beispiele für Antennen sind Antennen für radio-frequency identification (RFID), radio detection and ranging (RADAR), 5G, Long Term Evolution (LTE), Global System for Mobile Communication (GSM), Global Positioning System (GPS), Radio (FM, DAB), Industrial, Scientific and Medical Band (ISM-Bänder) und Wireless Local Area Network (WLAN).

In einer Ausführungsform der erfindungsgemäßen Verbundscheibe weist das Einlegeelement mindestens zwei elektrisch leitfähige Elemente auf, die unterschiedlich strukturiert sind.

Die Substratschicht und, sofern vorhanden, die opake Schicht des Einlegeelements haben im Wesentlichen die gleichen äußeren Abmessungen. Sie erstrecken sich somit im Wesentlichen über die gesamte Länge und Breite des Einlegeelements.

"Im Wesentlichen gleiche äußeren Abmessungen" bedeutet, dass die äußeren Abmessungen zweier Materialien um maximal 5 %, bevorzugt um 3 %, besonders bevorzugt um maximal 2 % voneinander abweichen.

Das optional vorhandene mindestens eine elektrisch leitfähige Element erstreckt sich vollflächig oder nur abschnittsweise in dem Einlegeelement.

Weist das Einlegeelement beispielsweise nur ein elektrisch leitfähiges Element auf, das in Form einer elektrisch beheizbaren Schicht oder Beschichtung ausgebildet ist, so erstreckt sich diese elektrisch beheizbare Schicht oder Beschichtung entweder vollflächig oder abschnittsweise in dem Einlegeelement, d.h. die elektrisch beheizbare Schicht oder Beschichtung ist vollflächig oder im Wesentlichen vollflächig oder abschnittsweise auf der Substratschicht oder der Substratschicht und der opaken Schicht angeordnet.

Das mindestens eine elektrisch leitfähige Element kann eine elektrisch beheizbare Beschichtung, eine Kohlenstoff enthaltene Schicht, oder eine metallische Schicht sein. Alternativ kann das mindestens eine elektrisch leitfähige Element ein leitfähiges Polymer enthalten oder daraus bestehen. Dem Fachmann ist bekannt, welche Materialien sich als elektrisch leitfähige Elemente eignen. Beispielsweise kann das mindestens eine elektrisch leitfähige Element eine Indium-Zinn-Oxid (ITO) Schicht oder Beschichtung, eine Silber oder silberhaltige Legierung enthaltene Schicht oder Beschichtung, eine Gold, Aluminium oder Wolfram enthaltene Schicht oder Beschichtung, eine Graphite enthaltene Schicht oder Beschichtung oder Graphen sein. Beispiele für leitfähige und somit beheizbare Polymere sind Poly-3,4-ethylendioxythiophen (PEDOT) mit Polystyrolsulfonat (PSS) als Gegenion, dotiertes Polyacetylen (PAC) und Polyanilin (PAni).

Das elektrisch leitfähige Element ist bevorzugt zwischen 5 µm und 50 µm, besonders bevorzugt zwischen 5 µm und 20 µm, ganz besonders bevorzugt zwischen 8 µm und 15 µm dick. Ist das elektrisch leitfähige Element beispielsweise als eine elektrisch beheizbare Schicht ausgebildet, so ist es beispielsweise 10 µm dick. Das elektrisch leitfähige Element muss nicht zwingend über seine gesamte Fläche eine konstante Dicke aufweisen. Über die Variation der Dicke und die Strukturierung des elektrisch leitfähigen Elements lassen sich die funktionalen Eigenschaften des elektrisch leitfähigen Elements beeinflussen.

In Ausführungsformen, in denen das leitfähige Element als Beschichtung auf die Substratschicht aufgebracht ist, ist das leitfähige Element bevorzugt zwischen 10 nm und 5000 nm, bevorzugt zwischen 10 nm und 100 nm dick.

In einer bevorzugten Ausführungsform enthält die Substratschicht Polyethylenterephthalat (PET), Polymethylmethacrylat (PMMA), Polypropylen (PP) oder Polyethylen (PE) oder besteht daraus. Besonders bevorzugt enthält die Substratschicht PET, oder besteht daraus.

Die Substratschicht ist bevorzugt zwischen 50 µm und 150 µm, besonders bevorzugt zwischen 50 µm und 100 µm, ganz besonders bevorzugt zwischen 60 µm und 80 µm dick. Die Substratschicht ist beispielsweise 50 µm dick.

Wie oben erläutert kann die Substratschicht bereichsweise opak eingefärbt sein.

In einer bevorzugten Ausführungsform enthält die opake Schicht des funktionalen Einlegeelements Polyethylenterephthalat (PET) oder Polyethylen (PE) oder EthylenVinylacetat-Copolymer (EVA), insbesondere PET. In einer besonders bevorzugten Ausführungsform besteht die opake Schicht des funktionalen Einlegeelements aus Polyethylenterephthalat (PET) oder Polyethylen (PE), insbesondere aus PET.

Die opake Schicht ist bevorzugt zwischen 50 µm (Mikrometer) und 200 µm dick, besonders bevorzugt hat sie die selbe Dicke wie die transparente Substratschicht.

In Ausführungsformen, in denen die opake Schicht als opake Beschichtung auf der Substratschicht ausgeführt ist, ist die opake Beschichtung bevorzugt 5 µm bis 15 µm dick.

Es versteht sich, dass die opake Schicht auch als eine opake Beschichtung der transparenten Substratschicht ausgebildet sein kann. Dem Fachmann sind geeignete opake Beschichtungen und Druckverfahren zur Auftragung der opaken Beschichtung auf die Substratschicht bekannt.

In bevorzugten Ausführungsformen ist die opake Schicht oder der opak eingefärbte Bereich der transparenten Substratschicht zumindest abschnittsweise durchlässig für Infrarotstrahlung mit einer Wellenlänge im Bereich zwischen 800 nm und 1560 nm. In diesen Ausführungsformen ist die opake Schicht oder der opak eingefärbte Bereich der transparenten Substratschicht somit zumindest abschnittsweise transparent für die Strahlung von Infrarot- oder light detection and ranging (LiDaR) Sensoren.

Die erste thermoplastische Zwischenschicht und die zweite thermoplastische Zwischenschicht enthalten unabhängig voneinander bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der ersten thermoplastischen Zwischenschicht und der zweiten thermoplastischen Zwischenschicht beträgt unabhängig voneinander bevorzugt von 0,2 mm bis 2 mm, besonders bevorzugt von 0,3 mm bis 1 mm, beispielsweise 0,38 mm oder 0,76 mm. In einer Ausführungsform ist die Dicke der ersten thermoplastischen Zwischenschicht zwischen 20 µm und 120 µm, bevorzugt zwischen 30 µm und 90 µm, besonders bevorzugt zwischen 50 µm und 75 µm und ganz besonders bevorzugt 50 µm.

Die erste thermoplastische Zwischenschicht und/oder die zweite thermoplastische Zwischenschicht können auch auf die Substratschicht oder die bereichsweise opak eingefärbte Substratschicht aufgesprüht sein.

Es versteht sich, dass in Ausführungsformen die erfindungsgemäße Verbundscheibe zusätzlich zur ersten thermoplastischen Schicht, zur zweiten thermoplastischen Schicht und dem Einlegeelement noch weitere thermoplastische und/oder funktionale Schichten aufweisen kann.

In einer bevorzugten Ausführungsform einer erfindungsgemäßen Verbundscheibe ist die opake Schicht oder der opak eingefärbte Bereich der Substratschicht schwarz. Die opake Schicht oder der opak eingefärbte Bereich der Substratschicht kann aber auch jede andere Farbe haben. Die opake Schicht kann eine durchgefärbte Schicht oder eine bedruckte Schicht sein oder durch eine opake Beschichtung realisiert werden.

Eine erfindungsgemäße Verbundscheibe kann zusätzlich einen Abdeckdruck, insbesondere aus einer dunklen, bevorzugt schwarzen, Emaille umfassen. Bevorzugt haben die opake Schicht oder der opak eingefärbte Bereich der Substratschicht und der Abdeckdruck im Wesentlichen die gleiche optische Dichte. Bei dem Abdeckdruck handelt es sich insbesondere um einen peripheren, d.h. rahmenartigen, Abdeckdruck. Der periphere Abdeckdruck dient in erster Linie als UV-Schutz für den Montagekleber der Verbundscheibe. Der Abdeckdruck kann opak und vollflächig ausgebildet sein. Der Abdeckdruck kann zumindest abschnittsweise auch semitransparent, beispielsweise als Punktraster, Streifenraster oder kariertes Raster ausgebildet sein. Alternativ kann der Abdeckdruck auch einen Gradienten aufweisen, beispielsweise von einer opaken Bedeckung zu einer semitransparenten Bedeckung.

Eine "im Wesentlichen gleiche optische Dichte" bedeutet, dass die optischen Dichten zweier Materialien um maximal 5 %, bevorzugt um 3 %, besonders bevorzugt um maximal 2 % voneinander abweichen.

In einer bevorzugten Ausführungsform einer erfindungsgemäßen Verbundscheibe umfasst diese einen Abdeckdruck, der die gleiche Farbe wie die opake Schicht oder der opak eingefärbte Bereich der Substratschicht hat.

Der Abdeckdruck ist üblicherweise auf der innenraumseitigen Oberfläche der Außenscheibe oder auf der innenraumseitigen Oberfläche der Innenscheibe aufgebracht.

Bevorzugt ist das Einlegeelement derart zwischen der Außenscheibe und der Innenscheibe angeordnet, dass in den Ausführungsformen, in denen das Einlegeelement eine Substratschicht und eine opake Schicht umfasst, die opake Schicht des Einlegeelements möglichst unmittelbar benachbart zur ersten thermoplastischen Zwischenschicht angeordnet ist. Bei einer derartigen Anordnung sind bei Draufsicht von außen, die Zuleitungen und Anschlüsse des optional vorhandenen, mindestens einen elektrisch leitfähigen Elements durch die opake Schicht verdeckt. Alternativ können die Zuleitungen und Anschlüsse auch weitestgehend oder vollständig in die opake Schicht eingebettet sein.

Die Außenscheibe, die Innenscheibe, die erste thermoplastische Zwischenschicht und die zweite thermoplastische Zwischenschicht können unabhängig voneinander klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheibe können aus nicht vorgespanntem, teilvorgespanntem oder vorgespanntem Glas bestehen. Die Dicke der Außenscheibe und der Innenscheibe beträgt typischerweise von 0,3 mm bis 5 mm, bevorzugt von 1 mm bis 3 mm, beispielsweise 2,1 mm.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

In einer bevorzugten Ausführungsform ist die Verbundscheibe eine Fahrzeug-Verbundscheibe, insbesondere eine Windschutzscheibe.

In einer Ausführungsform ist die Verbundscheibe eine Windschutzscheibe, die entlang einer Mittellinie spiegelsymmetrisch ist, und das Einlegeelement ist auf der Mittellinie in der Nähe der Oberkante der Windschutzscheibe angeordnet.

In der Nähe der Oberkante bedeutet insbesondere, dass der Abstand zwischen dem Einlegeelement und der Oberkante maximal 30 mm, bevorzugt maximal 20 mm, besonders bevorzugt maximal 15 mm, ganz besonders bevorzugt maximal 10 mm beträgt.

Das optional vorhandene mindestens eine elektrisch leitfähige Element kann mit einer Spannungsquelle verbunden sein. Dabei kann jedes elektrisch leitfähige Element mit einer eigenen Spannungsquelle verbunden sein oder mehrere elektrisch leitfähige Elemente mit derselben Spannungsquelle verbunden sein.

Als Zuleitung zur Kontaktierung von elektrisch leitfähigen Elementen im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Ein weiterer Aspekt der Erfindung ist eine Anordnung, umfassend eine erfindungsgemäße Verbundscheibe und einen daran angebrachten optischen Sensor, der an der von der zweiten thermoplastischen Zwischenschicht abgewandten, innenraumseitigen Oberfläche der Innenscheibe befestigt ist.

In einer Ausführungsform dieser Anordnung weist das Einlegeelement eine Substratschicht und eine opake Schicht auf und die opake Schicht weist eine Aussparung auf, die in Durchsicht vollständig innerhalb der Aussparung in der Innenscheibe angeordnet ist. In dieser Ausführungsform ist der optische Sensor auf den Bereich der Aussparung in der opaken Schicht, d.h. das Sensorfenster gerichtet. Der Detektionsstrahlengang des Sensors verläuft folglich durch die Aussparung in der opaken Schicht hindurch. Der optische Sensor ist bevorzugt eine optische Kamera, das heißt eine Kamera mit Empfindlichkeit im sichtbaren Spektralbereich, beispielsweise eine Fahrspur-Kamera oder eine Kamera für ein *Augmented* Reality-Head-Up-Display.

In einer weiteren Ausführungsform dieser Anordnung weist das Einlegeelement eine Substratschicht auf, die bereichsweise opak eingefärbt ist, und einen Bereich aufweist, der von der opaken Einfärbung ausgenommen ist und in Durchsicht vollständig innerhalb der Aussparung der Innenscheibe angeordnet ist. In dieser Ausführungsform ist der optische Sensor auf den von der opaken Einfärbung ausgenommenen Bereich der Substratschicht, d.h. das Sensorfenster gerichtet. Der Detektionsstrahlengang des Sensors verläuft folglich durch den von der opaken Einfärbung ausgenommenen Bereich hindurch. Der optische Sensor ist bevorzugt eine optische Kamera, das heißt eine Kamera mit Empfindlichkeit im sichtbaren Spektralbereich, beispielsweise eine Fahrspur-Kamera oder eine Kamera für ein *Augmented* Reality-Head-Up-Display.

In einer weiteren Ausführungsform dieser Anordnung weist das Einlegeelement eine Substratschicht und eine opake Schicht auf und die opake Schicht ist zumindest abschnittsweise durchlässig für Infrarotstrahlung mit einer Wellenlänge im Bereich zwischen 800 nm und 1560 nm und der optische Sensor ist ein Infrarot- oder light detection and ranging (LiDaR) Sensor, der auf den Abschnitt, der durchlässig für Infrarotstrahlung mit einer Wellenlänge im Bereich zwischen 800 nm und 1560 nm ist, gerichtet ist. Der Detektionsstrahlengang des Sensors verläuft folglich durch den Abschnitt in der opaken Schicht, der durchlässig für Infrarotstrahlung mit einer Wellenlänge im Bereich zwischen 800 nm und 1560 nm ist, hindurch.

In einer weiteren Ausführungsform dieser Anordnung weist das Einlegeelement eine Substratschicht die bereichsweise opak eingefärbt ist auf und der opak eingefärbte Bereich der Substratschicht ist zumindest abschnittsweise durchlässig für Infrarotstrahlung mit einer Wellenlänge im Bereich zwischen 800 nm und 1560 nm und der optische Sensor ist ein Infrarot- oder light detection and ranging (LiDaR) Sensor, der auf den Abschnitt, der durchlässig für Infrarotstrahlung mit einer Wellenlänge im Bereich zwischen 800 nm und 1560 nm ist, gerichtet ist. Der Detektionsstrahlengang des Sensors verläuft folglich durch den Abschnitt in der Substratschicht, der durchlässig für Infrarotstrahlung mit einer Wellenlänge im Bereich zwischen 800 nm und 1560 nm ist, hindurch.

Die erfindungsgemäße Verbundscheibe erfüllt die gesetzlichen Anforderungen hinsichtlich der Splitterkonfigurationen bei Crash-Tests, beispielsweise gemäß der ECE-Regelung R43.

Bei einer erfindungsgemäßen Verbundscheibe sind im Bereich des Sensorfensters die Brechkräfte gegenüber einer Verbundscheibe, bei der die Innenscheibe keine Aussparung im Bereich des Sensorfensters aufweist um mehr als 50 % reduziert. Typische verbleibende Brechkräfte liegen im Bereich von 10 bis 70 Millidioptrien (mdpt).

Die Erfindung betrifft auch ein Verfahren zur Herstellung einer Verbundscheibe, mindestens umfassend die folgenden Schritte:
(a) Bereitstellen einer Außenscheibe, einer Innenscheibe, die eine Aussparung aufweist, einer ersten thermoplastischen Zwischenschicht, einer zweiten thermoplastischen Zwischenschicht, die eine Aussparung aufweist, und eines Einlegeelements;
(b) Anordnen der ersten thermoplastischen Zwischenschicht unmittelbar benachbart zur Außenscheibe, der zweiten thermoplastischen Zwischenschicht unmittelbar benachbart zur Innenscheibe und des Einlegeelements zwischen der ersten thermoplastischen Zwischenschicht und der zweiten Zwischenschicht derart, dass die Aussparung der zweiten thermoplastischen Zwischenschicht in Durchsicht vollständig innerhalb des Bereichs, in dem das Einlegeelement angeordnet ist, angeordnet ist, und die Aussparung der Innenscheibe in Durchsicht vollständig innerhalb der Aussparung der zweiten thermoplastischen Zwischenschicht angeordnet ist; und
(c) Verbinden der Außenscheibe mit der Innenscheibe über die erste thermoplastische Zwischenschicht und die zweite thermoplastische Zwischenschicht durch Lamination.

Die Anordnung des Einlegeelements zwischen der ersten thermoplastischen Zwischenschicht und der zweiten thermoplastischen Zwischenschicht kann manuell oder maschinell, beispielsweise mittels eines Roboters, erfolgen.

Weist das Einlegeelement eine Substratschicht und eine opake Schicht, die eine Aussparung aufweist, auf oder weist das Einlegeelement eine Substratschicht auf, die bereichsweise opak eingefärbt ist und einen Bereich aufweist, der von der opaken Einfärbung ausgenommen ist, so wird in Schritt (b) des Verfahrens das Einlegeelement derartig zwischen der ersten thermoplastischen Zwischenschicht und der zweiten thermoplastischen Zwischenschicht angeordnet, dass in Durchsicht die Aussparung in der opaken Schicht oder der von der opaken Einfärbung ausgenommene Teil der bereichsweise opak eingefärbten Substratschicht vollständig innerhalb der Aussparung der Innenscheibe angeordnet ist.

In Ausführungsformen des Verfahrens, in denen das Einlegelement mindestens ein elektrisch leitfähiges Element aufweist, kann die Bereitstellung des Einlegeelements, d.h. die Anordnung der Substratschicht, des mindestens einen elektrisch leitfähigen Elements und sofern vorhanden der opaken Schicht manuell oder maschinell, beispielsweise mittels eines Roboters, erfolgen. Entsprechende Einlegeelemente können vorgefertigt und getestet werden und dann bei der Produktion der Verbundscheibe in der Verbinderlinie zwischen der ersten und der zweiten Scheibe angeordnet werden.

Das mindestens eine elektrisch leitfähige Element kann beispielsweise mittels Lasertechniken, Schneidverfahren, Druckverfahren, Ätzverfahren, Klebeverfahren, chemische Gasphasenabscheidung (CVD), physikalische Gasphasenabscheidung (PVD) oder Atomlagenabscheidung (ALD) prozessiert werden.

Soll die Verbundscheibe eine Biegung aufweisen, wie insbesondere für Personenkraftwagen üblich, so werden die Scheiben vor dem Laminieren einem Biegeprozess unterzogen, beispielsweise durch Schwerkraftbiegen, Saugbiegen und/oder Pressbiegen. Typische Biegetemperaturen betragen von 500°C bis 700°C.

Bevorzugt wird vor dem Laminieren und vor dem optionalen Biegen ein opaker Abdeckdruck insbesondere auf den Randbereich der Außenscheibe und/oder der Innenscheibe aufgebracht. Dazu wird typischerweise eine schwarze oder dunkle Emaille per Siebdruck aufgebracht und vor dem Laminieren, insbesondere vor dem Biegen oder während des Biegens, eingebrannt.

Die Erfindung betrifft auch die Verwendung einer erfindungsgemäßen Verbundscheibe als Fahrzeugscheibe, bevorzugt als Windschutzscheibe eines Kraftfahrzeugs.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: eine Draufsicht auf eine Ausgestaltung der erfindungsgemäßen Verbundscheibe,
- Fig. 2: einen Ausschnitt eines Querschnitts durch eine Ausgestaltung der erfindungsgemäßen Verbundscheibe der Fig. 1 entlang der Mittellinie M,
- Fig. 3: einen Ausschnitt eines Querschnitts durch eine weitere Ausgestaltung der erfindungsgemäßen Verbundscheibe der Fig. 1 entlang der Mittellinie M,
- Fig. 4: einen Ausschnitt eines Querschnitts durch eine weitere Ausgestaltung der erfindungsgemäßen Verbundscheibe der Fig. 1 entlang der Mittellinie M,
- Fig. 5: einen Ausschnitt eines Querschnitts durch eine weitere Ausgestaltung der erfindungsgemäßen Verbundscheibe der Fig. 1 entlang der Mittellinie M,
- Fig. 6: einen Ausschnitt eines Querschnitts durch eine weitere Ausgestaltung der erfindungsgemäßen Verbundscheibe der Fig. 1 entlang der Mittellinie M,
- Fig. 7: einen Ausschnitt eines Querschnitts durch eine weitere Ausgestaltung der erfindungsgemäßen Verbundscheibe der Fig. 1 entlang der Mittellinie M,
- Fig. 8: eine Draufsicht auf eine Ausführungsform eines Einlegeelements,
- Fig. 9: eine Draufsicht auf eine weitere Ausgestaltung der erfindungsgemäßen Verbundscheibe,
- Fig. 10: ein Flussdiagramm einer Ausführungsform des erfindungsgemäßen Verfahrens.

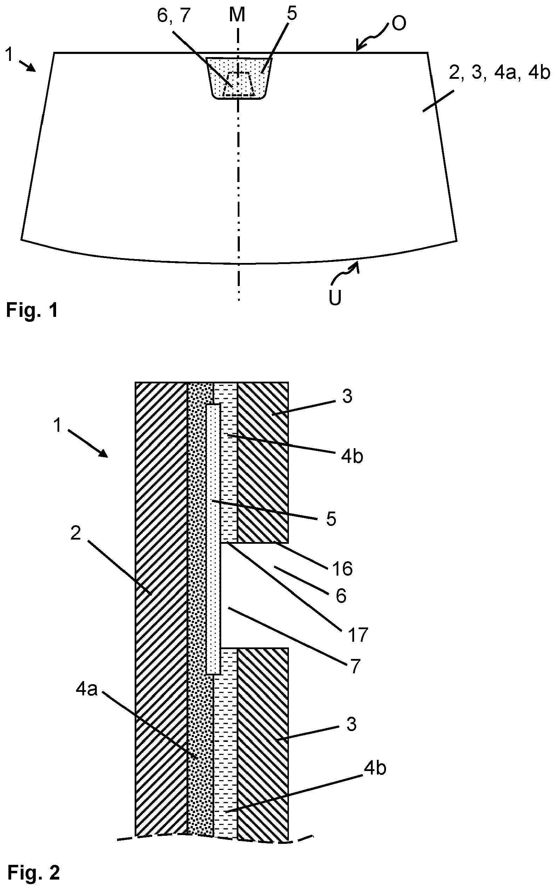

Fig. 1 zeigt eine Ausführungsform der erfindungsgemäßen Verbundscheibe 1 und in der Fig. 2 ist der Ausschnitt eines Querschnitts durch eine Ausgestaltung der erfindungsgemäßen Verbundscheibe 1 gemäß Fig. 1 entlang der Mittellinie M gezeigt. Die in der Fig. 1 gezeigte Verbundscheibe 1 ist entlang der Mittellinie M spiegelsymmetrisch und das funktionale Einlegeelement 5 ist auf der Mittellinie in der Nähe der Oberkante O angeordnet.

In der in Fig. 1 und 2 gezeigten Ausführungsform umfasst die Verbundscheibe 1 eine Außenscheibe 2 und eine Innenscheibe 3, die über eine unmittelbar benachbart zur Außenscheibe 2 angeordnete erste thermoplastische Zwischenschicht 4a und eine unmittelbar benachbart zur Innenscheibe 3 angeordnete zweite thermoplastische Zwischenschicht 4b flächig miteinander verbunden sind. Die Außenscheibe 2 und die Innenscheibe 3 bestehen aus Kalk-Natron-Glas und weisen beispielsweise eine Dicke von 2,1 mm auf. Zwischen der ersten thermoplastischen Zwischenschicht 4a und der zweiten thermoplastischen Zwischenschicht 4b ist ein Einlegelement 5 angeordnet Die erste thermoplastische Zwischenschicht 4a und die zweite thermoplastische Zwischenschicht 4b bestehen in der in den Fig. 1 und 2 gezeigten Ausführungsform aus Polyvinylbutyral (PVB) und sind jeweils 0,76 mm dick. Das Einlegeelement 5 weist in der in der Fig. 1 und 2 gezeigten Ausführungsform eine trapezförmige Form, bei der die zur Unterkante weisenden Ecken abgerundet sind, auf. Es ist aber auch jede andere für die Abdeckung von Sensoren geeignete äußere Form des Einlegeelements 5 möglich. Die zweite thermoplastische Zwischenschicht 4b weist eine Aussparung 7 auf, wobei die Aussparung 7 in Durchsicht vollständig in dem Bereich angeordnet ist, in dem das Einlegeelement 5 angeordnet ist. Die Innenscheibe 3 weist eine Aussparung 6 auf. Diese ist in Durchsicht vollständig innerhalb der Aussparung 7 der zweiten thermoplastischen Zwischenschicht 4b angeordnet. In der Fig. 2 gezeigten Ausführungsform sind die Innenkante 16 der Innenscheibe 3 und die Innenkante 17 der zweiten thermoplastischen Schicht 4b in Durchsicht deckungsgleich übereinander angeordnet. Es ist aber auch möglich, dass die Aussparung 7 in der zweiten thermoplastischen Zwischenschicht 4b größer als die Aussparung 6 in der Innenscheibe ist und der Abstand der Innenkante 17 der zweiten thermoplastischen Schicht 4b von der Innenkante 16 der Innenscheibe 3 beispielsweise 5 mm beträgt.

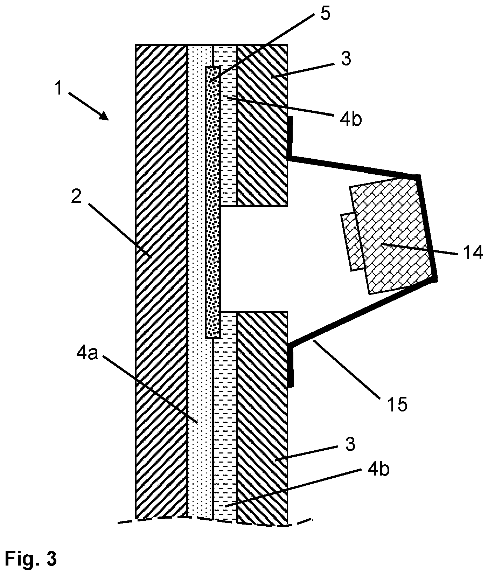

In der Fig. 3 ist ein Ausschnitt eines Querschnitts durch eine weitere Ausgestaltung der erfindungsgemäßen Verbundscheibe der Fig. 1 entlang der Mittellinie M gezeigt, der sich von der in der Fig. 2 gezeigten Ausführungsform nur dahingehend unterscheidet, dass diese zusätzlich einen optischen Sensor 14 umfasst, der an der Innenscheibe 3 über eine Halterung 15 angebracht ist. Der optische Sensor ist auf die Aussparung 6 (in der Figur 3 nicht mit einem Bezugszeichen versehen) der Innenscheibe gerichtet. Der optische Sensor 14 ist beispielsweise eine Fahrspurkamera oder ein LIDAR Sensor. Die Detektionsrichtung des optischen Sensors 14 ist außenseitig der Verbundscheibe 1 in etwa horizontal nach vorne gerichtet. Strahlung, die in einem sogenannten Sensorfenster horizontal durch die Fahrzeug-Verbundscheibe 1 tritt, wird durch den optischen Sensor 14 detektiert.

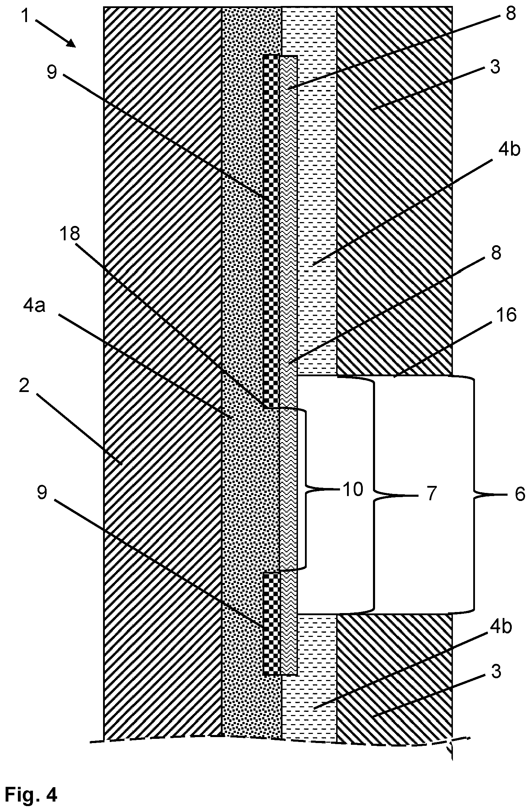

In der Fig. 4 ist ein Ausschnitt eines Querschnitts durch eine weitere Ausgestaltung der erfindungsgemäßen Verbundscheibe der Fig. 1 entlang der Mittellinie M gezeigt, der sich von der in der Fig. 2 gezeigten Ausführungsform nur dahingehend unterscheidet, dass dargestellt ist, dass das Einlegeelement 5 eine Substratschicht 8 und eine opake Schicht 9 aufweist. Die opake Schicht 9 weist eine Aussparung 10 auf, die in Durchsicht vollständig innerhalb der Aussparung 6 der Innenscheibe 3 angeordnet ist. Während der Lamination der Verbundscheibe fließt die erste thermoplastische Zwischenschicht 4a in die Aussparung 10 der opaken Schicht 9 hinein. Dies ist auch in der in der Fig. 4 gezeigten Ausführungsform der Fall. Der Abstand von der Innenkante 18 der opaken Schicht 9 zur Innenkante 16 der Innenscheibe 3 beträgt beispielsweise 10 mm. In der in der Fig. 4 gezeigten Ausführungsform ist beispielsweise die Substratschicht 8 eine transparente PET-Folie mit einer Dicke von 60 µm und die opake Schicht 9 eine PET-Folie mit einer Dicke von 50 µm.

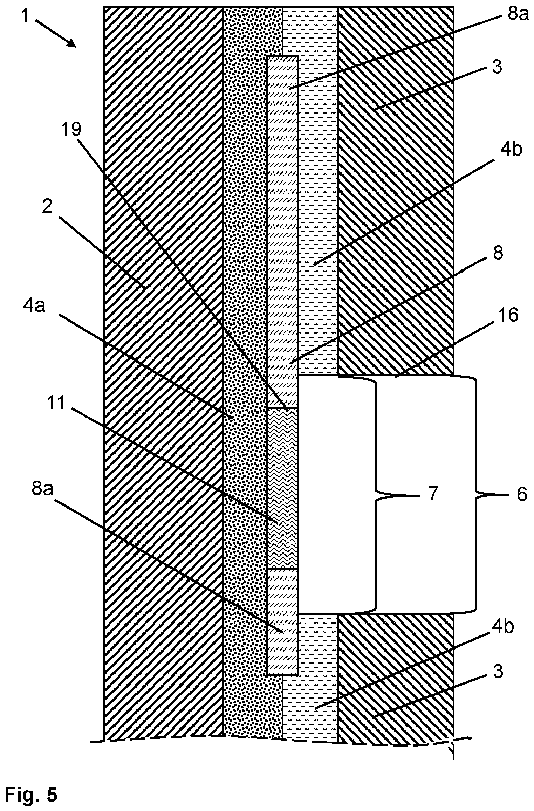

In der Fig. 5 ist ein Ausschnitt eines Querschnitts durch eine weitere Ausgestaltung der erfindungsgemäßen Verbundscheibe der Fig. 1 entlang der Mittellinie M gezeigt, der sich von der in der Fig. 2 gezeigten Ausführungsform nur dahingehend unterscheidet, dass dargestellt ist, dass das Einlegeelement 5 eine Substratschicht 8 aufweist, die bereichsweise opak eingefärbt ist (der opak eingefärbte Bereich ist mit dem Bezugszeichen 8a versehen). Der Bereich 11 der Substratschicht, der von der opaken Einfärbung ausgenommen und somit transparent ist, ist in Durchsicht vollständig innerhalb der Aussparung 6 der Innenscheibe 3 angeordnet ist. Der Abstand von der Innenkante 19 des Bereichs 11 zur Innenkante 16 der Innenscheibe 3 beträgt beispielsweise 10 mm. In der in der Fig. 5 gezeigten Ausführungsform ist beispielsweise die Substratschicht 8 eine PET-Folie mit einer Dicke von 80 µm.

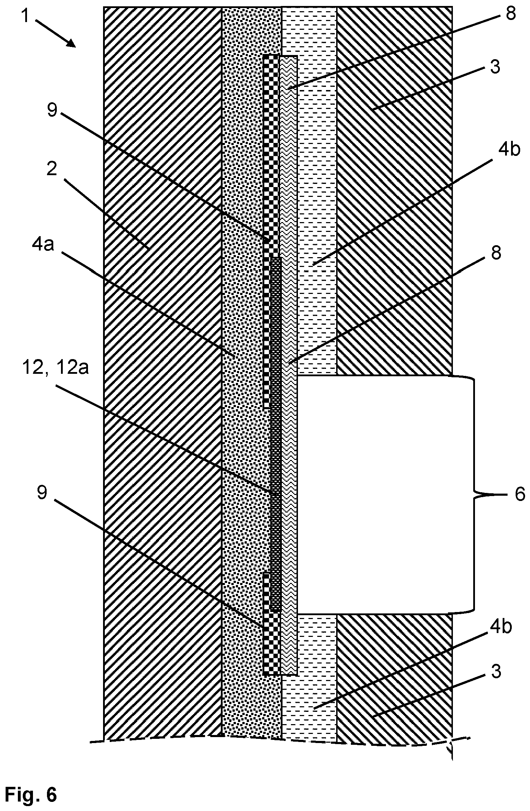

In der Fig. 6 ist ein Ausschnitt eines Querschnitts durch eine weitere Ausgestaltung der erfindungsgemäßen Verbundscheibe der Fig. 1 entlang der Mittellinie M gezeigt, der sich von der in der Fig. 4 gezeigten Ausführungsform nur dahingehend unterscheidet, dass das Einlegeelement 5 zusätzlich ein elektrisch leitfähiges Element 12, das als elektrisch beheizbare Schicht 12a ausgebildet ist aufweist. Das elektrisch leitfähige Element 12 ist zwischen der opaken Schicht 9 und der Substratschicht 8 angeordnet. Das elektrisch leitfähige Element 12 ist in der in der Fig. 6 gezeigten Ausführungsform von den äußeren Abmessungen größer als die Aussparung 6 in der Innenscheibe 3. Das elektrisch leitfähige Schicht 12 ist derartig angeordnet, dass in Durchsicht die Aussparung 6 in der Innenscheibe 3 vollständig innerhalb des Bereichs in dem das elektrisch leitfähige Element 12 angeordnet ist, angeordnet ist. Das elektrisch leitfähige Element 12 ist in der in der Fig. 6 gezeigten Ausführungsform ein elektrisch leitfähiges Polymer, wie beispielsweise Polyanilin mit einer Dicke von 100 nm.

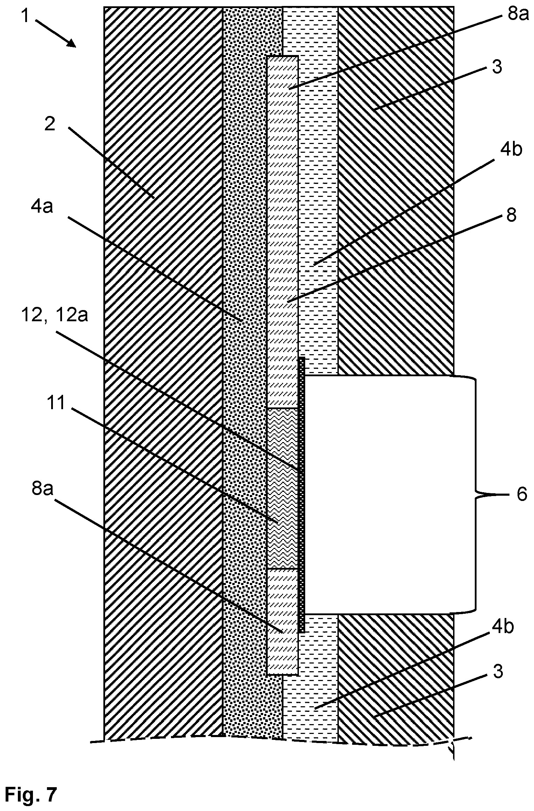

In der Fig. 7 ist ein Ausschnitt eines Querschnitts durch eine weitere Ausgestaltung der erfindungsgemäßen Verbundscheibe der Fig. 1 entlang der Mittellinie M gezeigt, der sich von der in der Fig. 5 gezeigten Ausführungsform nur dahingehend unterscheidet, dass das Einlegeelement 5 zusätzlich ein elektrisch leitfähiges Element 12, das als eine elektrisch beheizbare Beschichtung 12a ausgebildet ist, aufweist. Die elektrisch beheizbare Beschichtung 12a ist auf der Substratschicht 8 in Richtung der Innenscheibe 3 angebracht. Die elektrisch beheizbare Beschichtung 12a ist in der in der Fig. 7 gezeigten Ausführungsform von den äußeren Abmessungen größer als die Aussparung 6 in der Innenscheibe 3. Die elektrisch beheizbare Beschichtung 12a ist derartig angeordnet, dass in Durchsicht die Aussparung 6 in der Innenscheibe 3 vollständig innerhalb des Bereichs in dem das elektrisch leitfähige Element 12 in Form einer elektrisch beheizbaren Beschichtung 12a angeordnet ist, angeordnet ist. Das elektrisch leitfähige Element 12 ist in der in der Fig. 7 gezeigten Ausführungsform eine auf die bereichsweise opak eingefärbte Substratschicht 8 aufgebrachte ITO-Beschichtung mit einer Dicke von 50 nm.

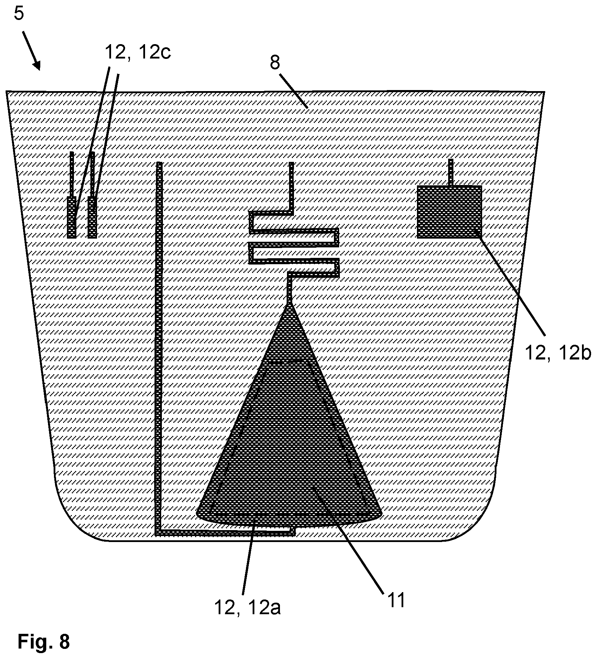

In der Fig. 8 ist die Draufsicht auf eine Ausführungsform eines Einlegeelements 5 gezeigt. Bei der in der Fig. 8 gezeigten Ausgestaltung des Einlegeelements 5 weist dies eine bereichsweise opak eingefärbte Substratschicht 8 auf. Der Bereich 11, der von der opaken Einfärbung ausgenommen ist und somit transparent ist, ist trapezförmig und zur besseren Darstellung in der Fig. 8 mit einer gestrichelten Linie umrandet. In der in der Fig. 8 in Draufsicht gezeigte Ausführungsform eines Einlegeelements 5 weist das Einlegeelement 5 vier elektrisch leitfähige Elemente 12 auf. Es ist aber auch möglich, dass das Einlegeelement mehr oder weniger elektrisch leitfähige Elemente 12 aufweist. Die elektrisch leitfähigen Elemente 12 sind in der Fig. 8 zur besseren Darstellung gemustert dargestellt. Eines dieser elektrisch leitfähigen Elemente 12 ist ein heizbares Element 12a ausgebildet mit einem ein Wesentlichen dreieckigen Bereich mit zwei davon abgehenden Leitungen. Ein weiteres dieser elektrisch leitfähigen Elemente 12 ist als eine Antenne 12b, beispielsweise eine GPS Antenne, mit einem im Wesentlichen quadratischen Bereich mit einer davon abgehenden Leitung ausgebildet. Zwei weitere dieser elektrisch leitfähigen Elemente 12 sind zusammen ein Feuchtigkeitssensor 12c, der als zwei im Wesentlichen rechteckigen Bereichen mit jeweils einer davon abgehenden Leitung ausgebildet ist. Wie aus der Fig. 8 ersichtlich ist, ist der im Wesentlichen dreieckige Bereich des heizbaren Elements 12a geringfügig größer als der von der opaken Einfärbung ausgenommene Bereich 11 der Substratschicht 8 und der von der opaken Einfärbung ausgenommene Bereich 11 liegt in Durchsicht vollständig innerhalb des dreieckigen Bereichs des heizbaren Elements 12a.

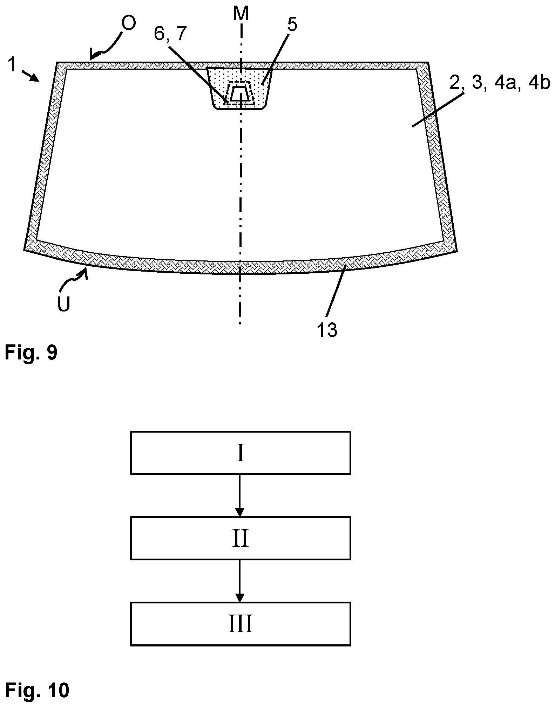

In der Fig. 9 ist eine weitere Ausführungsform einer erfindungsgemäßen Verbundscheibe 1 dargestellt. Die in der Fig. 9 dargestellte Verbundscheibe 1 unterscheidet sich von der in der Fig. 1 dargestellten nur dahingehend, dass sie zusätzlich einen peripheren Abdeckdruck 13 aus Emaille umfasst. Die opake Schicht 9 oder der opak eingefärbte Bereich der transparenten Substratschicht 8 des Einlegeelements 5 und der periphere Abdeckdruck 13 haben im Wesentlichen die gleiche optische Dichte und sind in der in Fig. 9 gezeigten Ausführungsform jeweils gemustert dargestellt. In der in Fig. 9 gezeigten Ausführungsform ist der periphere Abdeckdruck 13 nur benachbart zu den äußeren Kanten der Verbundscheibe 1 aufgebracht. Es ist aber auch möglich, dass zusätzlich auch noch ein Abdeckdruck 13 außen um das Einlegeelement 5 herum aufgebracht wird.

In der Fig. 10 ist das Fließdiagramm eines erfindungsgemäßen Verfahrens zur Herstellung einer erfindungsgemäßen Verbundscheibe 1 dargestellt. In einem ersten Schritt I werden eine Außenscheibe 2, eine Innenscheibe 3, die eine Aussparung 6 aufweist, eine erste thermoplastische Zwischenschicht 4a, eine zweite thermoplastische Zwischenschicht 4b, die eine Aussparung 7 aufweist, und ein Einlegeelement 5, bereitgestellt. In einem zweiten Schritt II werden die erste thermoplastische Zwischenschicht 4a unmittelbar benachbart zur Außenscheibe 2, die zweite thermoplastische Zwischenschicht 4b unmittelbar benachbart zur Innenscheibe 3 und das Einlegeelement 5 zwischen der ersten thermoplastischen Zwischenschicht 4a und der zweiten Zwischenschicht 4b derart angeordnet, dass die Aussparung 7 der zweiten thermoplastischen Zwischenschicht 4b in Durchsicht vollständig innerhalb des Bereichs, in dem das Einlegeelement 5 angeordnet ist, angeordnet ist, und die Aussparung 6 der Innenscheibe 3 in Durchsicht vollständig innerhalb der Aussparung 7 der zweiten thermoplastischen Zwischenschicht 4b angeordnet ist. In einem dritten Schritt III wird die Außenscheibe über die erste thermoplastische Zwischenschicht 4a und die zweite thermoplastische Zwischenschicht 4b mit der Innenscheibe 3 durch Lamination verbunden.

### Bezugszeichenliste:

- 1: Verbundscheibe
- 2: Außenscheibe
- 3: Innenscheibe
- 4a: erste thermoplastische Zwischenschicht
- 4b: zweite thermoplastische Zwischenschicht
- 5: Einlegeelement
- 6: Aussparung (in der Innenscheibe)
- 7: Aussparung (in der zweiten thermoplastischen Zwischenschicht)
- 8: Substratschicht
- 8a: opak eingefärbter Bereich der Substratschicht
- 9: opake Schicht
- 10: Aussparung (in der opaken Schicht)
- 11: Bereich (der von der opaken Einfärbung ausgenommen ist)
- 12: elektrisch leitfähiges Element
- 12a: elektrisch heizbares Element, elektrisch heizbare Schicht, elektrisch beheizbare Beschichtung
- 12b: Antenne
- 12c: Feuchtigkeitssensor
- 13: Abdeckdruck
- 14: Sensor
- 15: Halterung
- 16: Innenkante der Innenscheibe
- 17: Innenkante der zweiten thermoplastischen Zwischenschicht
- 18: Innenkante der opaken Schicht
- 19: Innenkante des Bereichs 11

- O: Oberkante/Dachkante der Verbundscheibe
- U: Unterkante/Motorkante der Verbundscheibe
- M: Mittellinie

## Patentansprüche

1. Verbundscheibe (1), mindestens umfassend
- eine Außenscheibe (2) und eine Innenscheibe (3), die über eine unmittelbar benachbart zur Außenscheibe (2) angeordnete erste thermoplastische Zwischenschicht (4a) und eine unmittelbar benachbart zur Innenscheibe (3) angeordnete zweite thermoplastische Zwischenschicht (4b) miteinander verbunden sind, und
- ein Einlegeelement (5), das in einem Bereich der Verbundscheibe zwischen der ersten thermoplastischen Zwischenschicht (4a) und der zweiten thermoplastischen Zwischenschicht (4b) angeordnet ist,
wobei die Innenscheibe (3) eine Aussparung (6) und die zweite thermoplastische Zwischenschicht (4b) eine Aussparung (7) aufweist und die Aussparung (7) der zweiten thermoplastischen Zwischenschicht (4b) in Durchsicht vollständig innerhalb des Bereichs, in dem das Einlegeelement (5) angeordnet ist, angeordnet ist, und die Aussparung (6) der Innenscheibe (3) in Durchsicht vollständig innerhalb der Aussparung (7) der zweiten thermoplastischen Zwischenschicht (4b) angeordnet ist.

2. Verbundscheibe (1) nach Anspruch 1, wobei das Einlegeelement (5) eine Substratschicht (8) und eine opake Schicht (9) umfasst und die opake Schicht (9) eine Aussparung (10) aufweist, die in Durchsicht vollständig innerhalb der Aussparung (6) der Innenscheibe (3) angeordnet ist.

3. Verbundscheibe (1) nach Anspruch 1, wobei das Einlegeelement (5) eine Substratschicht (8) umfasst, die bereichsweise opak eingefärbt ist und einen Bereich (11) aufweist, der von der opaken Einfärbung ausgenommen ist und in Durchsicht vollständig innerhalb der Aussparung (6) der Innenscheibe (3) angeordnet ist.

4. Verbundscheibe (1) nach Anspruch 2 oder 3, wobei die Substratschicht (8) ein elektrisch leitfähiges Polymer enthält oder daraus besteht.

5. Verbundscheibe (1) nach Anspruch 2 oder 3, wobei das Einlegeelement (5) mindestens ein elektrisch leitfähiges Element (12) aufweist.

6. Verbundscheibe (1) nach Anspruch 5, wobei das mindestens eine elektrisch leitfähige Element (12) unabhängig voneinander als ein elektrisch heizbares Element (12a), ein Feuchtigkeitssensor (12c), ein Drucksensor, eine Antenne (12b) oder ein Träger für elektronische Leitungen und Komponenten ausgebildet ist.

7. Verbundscheibe (1) nach Anspruch 5 oder 6, wobei das mindestens eine elektrisch leitfähige Element (12) eine elektrisch leitfähige Beschichtung, eine Kohlenstoff enthaltene Schicht oder eine metallische Schicht ist oder ein elektrisch leitfähiges Polymer enthält oder daraus besteht.

8. Verbundscheibe (1) nach einem der Ansprüche 5 bis 7, wobei das Einlegeelement (5) mindestens zwei elektrisch leitfähige Elemente (12) aufweist, die unterschiedlich strukturiert sind.

9. Verbundscheibe (1) nach einem der Ansprüche 2 bis 8, wobei die Aussparung (10) in der opaken Schicht (9) oder der von der opaken Einfärbung ausgenommene Bereich (11) der Substratschicht (8) ein Sensorfenster für einen optischen Sensor (14) ist.

10. Verbundscheibe (1) nach einem der Ansprüche 2 bis 3 oder 5 bis 8, wobei die Substratschicht (8) Polyethylenterephthalat (PET), Polymethylmethacrylat (PMMA), Polypropylen (PP) oder Polyethylen (PE), bevorzugt PET, enthält oder daraus besteht.

11. Verbundscheibe (1) nach einem der Ansprüche 2 oder 4 bis 10, wobei die opake Schicht (9) Polyethylenterephthalat (PET) oder Polyethylen (PE), Ethylen-Vinylacetat-Copolymer (EVA), bevorzugt PET, enthält oder daraus besteht.

12. Verbundscheibe (1) nach einem der Ansprüche 2 bis 3 oder 5 bis 11, wobei in Durchsicht mindestens im Bereich der Aussparung (10) oder im von der opaken Einfärbung ausgenommenen Bereich (11) ein als ein elektrisch heizbares Element (12a) ausgebildetes elektrisch leitfähiges Element (12) angeordnet ist.

13. Verbundscheibe (1) nach einem der Ansprüche 1 bis 12, wobei die Verbundscheibe (1) eine Windschutzscheibe ist, die eine Oberkante (O) und eine Unterkante (U) aufweist und entlang einer Mittellinie (M) im Wesentlichen spiegelsymmetrisch ist, und das Einlegeelement (5) auf der Mittellinie (M) in der Nähe der Oberkante (O) der Windschutzscheibe angeordnet ist.

14. Verfahren zur Herstellung einer Verbundscheibe (1) nach einem der Ansprüche 1 bis 13, wobei zumindest
(a) eine Außenscheibe (2), eine Innenscheibe (3), die eine Aussparung (6) aufweist, eine erste thermoplastische Zwischenschicht (4a), eine zweite thermoplastische Zwischenschicht (4b), die eine Aussparung (7) aufweist, und ein Einlegeelement (5), bereitgestellt werden;
(b) die erste thermoplastische Zwischenschicht (4a) unmittelbar benachbart zur Außenscheibe (2), die zweite thermoplastische Zwischenschicht (4b) unmittelbar benachbart zur Innenscheibe (3) und das Einlegeelement (5) zwischen der ersten thermoplastischen Zwischenschicht (4a) und der zweiten Zwischenschicht (4b) derart angeordnet werden, dass die Aussparung (7) der zweiten thermoplastischen Zwischenschicht (4b) in Durchsicht vollständig innerhalb des Bereichs, in dem das Einlegeelement (5) angeordnet ist, angeordnet ist, und die Aussparung (6) der Innenscheibe (3) in Durchsicht vollständig innerhalb der Aussparung (7) der zweiten thermoplastischen Zwischenschicht (4b) angeordnet ist; und
(c) die Außenscheibe (2) über die erste thermoplastische Zwischenschicht (4a) und die zweite thermoplastische Zwischenschicht (4b) mit der Innenscheibe (3) durch Lamination verbunden wird.

15. Verwendung einer Verbundscheibe (1) nach einem der Ansprüche 1 bis 13 als Fahrzeugscheibe, bevorzugt als Windschutzscheibe eines Kraftfahrzeugs.

## Claims

1. Composite pane (1), at least comprising
- an outer pane (2) and an inner pane (3) which are joined to one another via a first thermoplastic intermediate layer (4a) arranged directly adjacent the outer pane (2) and a second thermoplastic intermediate layer (4b) arranged directly adjacent the inner pane (3), and
- an inlay element (5) which is arranged in a region of the composite pane between the first thermoplastic intermediate layer (4a) and the second thermoplastic intermediate layer (4b),
wherein the inner pane (3) has a cutout (6) and the second thermoplastic intermediate layer (4b) has a cutout (7), and the cutout (7) of the second thermoplastic intermediate layer (4b) is, when looked through, arranged completely within the region in which the inlay element (5) is arranged, and the cutout (6) of the inner pane (3) is, when looked through, arranged completely within the cutout (7) of the second thermoplastic intermediate layer (4b).

2. Composite pane (1) according to claim 1, wherein the inlay element (5) comprises a substrate layer (8) and an opaque layer (9), and the opaque layer (9) has a cutout (10) which is, when looked through, arranged completely within the cutout (6) of the inner pane (3).

3. Composite pane (1) according to claim 1, wherein the inlay element (5) comprises a substrate layer (8) which is opaquely colored in some regions and has a region (11) which is excluded from the opaque coloring and is, when looked through, arranged completely within the cutout (6) of the inner pane (3).

4. Composite pane (1) according to claim 2 or 3, wherein the substrate layer (8) contains or consists of an electrically conductive polymer.

5. Composite pane (1) according to claim 2 or 3, wherein the inlay element (5) has at least one electrically conductive element (12).

6. Composite pane (1) according to claim 5, wherein, independently of one another, the at least one electrically conductive element (12) is implemented as an electrically heatable element (12a), a moisture sensor (12c), a pressure sensor, an antenna (12b), or a carrier for electronic lines and components.

7. Composite pane (1) according to claim 5 or 6, wherein the at least one electrically conductive element (12) is an electrically conductive coating, a carbon-containing layer, or a metallic layer or contains or consists of an electrically conductive polymer.

8. Composite pane (1) according to one of claims 5 through 7, wherein the inlay element (5) has at least two electrically conductive elements (12) that are structured differently.

9. Composite pane (1) according to one of claims 2 through 8, wherein the cutout (10) in the opaque layer (9) or the region (11) of the substrate layer (8) excluded from the opaque coloring is a sensor window for an optical sensor (14).

10. Composite pane (1) according to one of claims 2 through 3 or 5 through 8, wherein the substrate layer (8) contains or consists of polyethylene terephthalate (PET), polymethyl methacrylate (PMMA), polypropylene (PP), or polyethylene (PE), preferably PET.

11. Composite pane (1) according to one of claims 2 or 4 through 10, wherein the opaque layer (9) contains or consists of polyethylene terephthalate (PET) or polyethylene (PE), ethylene vinyl acetate copolymer (EVA), preferably PET.

12. Composite pane (1) according to one of claims 2 through 3 or 5 through 11, wherein, when looked through, at least in the region of the cutout (10) or in the region (11) excluded from the opaque coloring, an electrically conductive element (12) implemented as an electrically heatable element (12a) is arranged.

13. Composite pane (1) according to one of claims 1 through 12, wherein the composite pane (1) is a windshield that has an upper edge (O) and a lower edge (U) and is substantially mirror-symmetrical along a center line (M), and the inlay element (5) is arranged on the center line (M) near the upper edge (O) of the windshield.

14. Method for producing a composite pane (1) according to one of claims 1 through 13, wherein at least
(a) an outer pane (2), an inner pane (3) which has a cutout (6), a first thermoplastic intermediate layer (4a), a second thermoplastic intermediate layer (4b) which has a cutout (7), and an inlay element (5) are provided;
(b) the first thermoplastic intermediate layer (4a) directly adjacent the outer pane (2), the second thermoplastic intermediate layer (4b) directly adjacent the inner pane (3), and the inlay element (5) between the first thermoplastic intermediate layer (4a) and the second intermediate layer (4b) are arranged such that the cutout (7) of the second thermoplastic intermediate layer (4b) is, when looked through, arranged completely within the region, in which the inlay element (5) is arranged, and, when looked through, the cutout (6) of the inner pane (3) is arranged completely within the cutout (7) of the second thermoplastic intermediate layer (4b); and
(c) the outer pane (2) is joined to the inner pane (3) by lamination via the first thermoplastic intermediate layer (4a) and the second thermoplastic intermediate layer (4b).

15. Use of a composite pane (1) according to one of claims 1 through 13 as a vehicle pane, preferably as a windshield of a motor vehicle.

## Revendications

1. Vitre feuilletée (1), comportant au moins
- une vitre extérieure (2) et une vitre intérieure (3), qui sont reliées entre elles par une première couche intermédiaire thermoplastique (4a) disposée directement adjacente à la vitre extérieure (2) et une seconde couche intermédiaire thermoplastique (4b) disposée directement adjacente à la vitre intérieure (3) ; et
- un élément d'insertion (5), qui est disposé dans une zone de la vitre feuilletée entre la première couche intermédiaire thermoplastique (4a) et la seconde couche intermédiaire thermoplastique (4b),
la vitre intérieure (3) présentant un évidement (6) et la seconde couche intermédiaire thermoplastique (4b) présentant un évidement (7), et l'évidement (7) de la seconde couche intermédiaire thermoplastique (4b) étant, en regardant à travers, entièrement disposé à l'intérieur de la zone dans laquelle l'élément d'insertion (5) est disposé, et l'évidement (6) de la vitre intérieure (3) étant, en regardant à travers, entièrement disposé à l'intérieur de l'évidement (7) de la seconde couche intermédiaire thermoplastique (4b).

2. Vitre feuilletée (1) selon la revendication 1, dans laquelle l'élément d'insertion (5) comporte une couche de substrat (8) et une couche opaque (9), et la couche opaque (9) présente un évidement (10) qui est, en regardant à travers, entièrement disposé à l'intérieur de l'évidement (6) de la vitre intérieure (3).

3. Vitre feuilletée (1) selon la revendication 1, dans laquelle l'élément d'insertion (5) comporte une couche de substrat (8) qui est colorée de manière opaque par endroits et présente une zone (11) qui est exclue de la coloration opaque et est, en regardant à travers, entièrement disposée à l'intérieur de l'évidement (6) de la vitre intérieure (3).

4. Vitre feuilletée (1) selon l'une des revendications 2 ou 3, dans laquelle la couche de substrat (8) contient un polymère électriquement conducteur ou est constituée d'un tel polymère.

5. Vitre feuilletée (1) selon l'une des revendications 2 ou 3, dans laquelle l'élément d'insertion (5) présente au moins un élément électriquement conducteur (12) .

6. Vitre feuilletée (1) selon la revendication 5, dans laquelle ledit au moins un élément électriquement conducteur (12) est conçu indépendamment l'un de l'autre comme élément électriquement chauffant (12a), capteur d'humidité (12c), capteur de pression, antenne (12b) ou support pour des conducteurs et composants électroniques.

7. Vitre feuilletée (1) selon l'une des revendications 5 ou 6, dans laquelle ledit au moins un élément électriquement conducteur (12) est un revêtement électriquement conducteur, une couche contenant du carbone ou une couche métallique, ou contient un polymère électriquement conducteur ou est constitué d'un tel polymère.

8. Vitre feuilletée (1) selon l'une des revendications 5 à 7, dans laquelle l'élément d'insertion (5) présente au moins deux éléments électriquement conducteurs (12) qui sont structurés différemment.

9. Vitre feuilletée (1) selon l'une des revendications 2 à 8, dans laquelle l'évidement (10) dans la couche opaque (9) ou la zone (11) de la couche de substrat (8) exclue de la coloration opaque est une fenêtre de détection pour un capteur optique (14).

10. Vitre feuilletée (1) selon l'une des revendications 2 à 3 ou 5 à 8, dans laquelle la couche de substrat (8) contient du poly(téréphtalate d'éthylène) (PET), du poly(méthacrylate de méthyle) (PMMA), du polypropylène (PP) ou du polyéthylène (PE), de préférence du PET, ou en est constituée.

11. Vitre feuilletée (1) selon l'une des revendications 2 ou 4 à 10, dans laquelle la couche opaque (9) contient du poly(téréphtalate d'éthylène) (PET) ou du polyéthylène (PE), du copolymère éthylène-acétate de vinyle (EVA), de préférence du PET, ou en est constituée.

12. Vitre feuilletée (1) selon l'une des revendications 2 à 3 ou 5 à 11, dans laquelle, en regardant à travers, au moins dans la zone de l'évidement (10) ou dans la zone (11) exclue de la coloration opaque, est disposé un élément électriquement conducteur (12) réalisé sous la forme d'un élément pouvant être chauffé électriquement (12a).

13. Vitre feuilletée (1) selon l'une des revendications 1 à 12, dans laquelle la vitre feuilletée (1) est un pare-brise qui présente un bord supérieur (O) et un bord inférieur (U) et qui est sensiblement à symétrie miroir le long d'une ligne médiane (M), et l'élément d'insertion (5) est disposé sur la ligne médiane (M) à proximité du bord supérieur (O) du pare-brise.

14. Procédé de fabrication d'une vitre feuilletée (1) selon l'une des revendications 1 à 13, dans lequel au moins
(a) une vitre extérieure (2), une vitre intérieure (3) qui présente un évidement (6), une première couche intermédiaire thermoplastique (4a), une seconde couche intermédiaire thermoplastique (4b) qui présente un évidement (7), et un élément d'insertion (5) sont fournis ;
(b) la première couche intermédiaire thermoplastique (4a) est disposée directement adjacente à la vitre extérieure (2), la seconde couche intermédiaire thermoplastique (4b) est disposée directement adjacente à la vitre intérieure (3) et l'élément d'insertion (5) est disposé entre la première couche intermédiaire thermoplastique (4a) et la seconde couche intermédiaire (4b) de telle sorte qu'en regardant à travers, l'évidement (7) de la deuxième couche intermédiaire thermoplastique (4b) soit entièrement disposé à l'intérieur de la zone dans laquelle l'élément d'insertion (5) est disposé, et, en regardant à travers, l'évidement (6) de la vitre intérieure (3) soit entièrement disposé à l'intérieur de l'évidement (7) de la seconde couche intermédiaire thermoplastique (4b) ; et
(c) la vitre extérieure (2) est reliée par laminage à la vitre intérieure (3) par la première couche intermédiaire thermoplastique (4a) et la seconde couche intermédiaire thermoplastique (4b).

15. Utilisation d'une vitre feuilletée (1) selon l'une des revendications 1 à 13 comme vitre de véhicule, de préférence comme pare-brise d'un véhicule automobile.
